# EUROPEAN PATENT APPLICATION

(11) **EP 2 908 265 A1**
(43) Date of publication of application: **19.08.2015**
(21) Application number: 14305207.4
(22) Date of filing: 14.02.2014
(51) Int. Cl.: G06K 7/10

(54) **Configurable piece of furniture comprising an adaptive radio frequency tag reader and method for selecting antennas in such a piece of furniture**

(71) Applicant: HMY Group, 89470 Moneteau (FR)
(72) Inventor: Lognon, Laurent, 89000 Saint Georges Sur Baulche (FR); Berthaud, Philippe, 89700 Tonnerre (FR)
(74) Representative: Santarelli

(57) **Abstract**

A configurable piece of furniture having at least one antenna module and a radio frequency tag reader is disclosed. The at least one antenna module comprises a plurality of antennas and a multiplexer for selectively connecting each antenna of the plurality of antennas to the radio frequency tag reader to identify radio frequency tags located in the vicinity of a selected antenna. The configurable piece of furniture comprises interrogating means for selecting sequentially each antenna of a set of active antennas to identify radio frequency tags located in the vicinity of the selected active antennas, the antennas of the set of active antennas being antennas of the plurality of antennas and the number of antennas in the plurality of antennas being greater than the number of antennas in the set of active antennas.

## Description

### FIELD OF THE INVENTION

The present invention relates generally to radio frequency systems, in particular RFID systems for making inventories of items, and more specifically to a configurable piece of furniture comprising an adaptive radio frequency tag reader and a method for selecting antennas in such a piece of furniture.

### BACKGROUND OF THE INVENTION

Thanks to the low cost of passive RFID tags (Radio Frequency Identification tags), RFID systems are used in many different applications including, in particular, retail applications for managing inventory. In such applications, an RFID reader comprising an antenna interrogates RFID tags located in the vicinity of the reader's antenna.

The kind of information returned by an RFID tag depends on its type. However, regarding retail applications, the data read in an RFID tag generally relates to the identification of the item associated with the RFID tag. Such identification may comprise an identifier of the item, a description of the item, an identifier of the manufacturer of the item, and the like. One of the main advantages of the use of RFID technology over other technologies such as barcode technology lies in its capacity to interrogate several tags simultaneously that may not be in direct line of sight of the reader.

However, although the use of RFID tags may present numerous advantages over traditional technologies, there remain some drawbacks. In particular, RFID readers are generally expensive and the communication range allowing communication between a reader and a low-cost RFID tag is limited.

To cope with such problems, several antennas are generally connected to a single RFID reader via a multiplexer which is used to select the antenna to be used. The antennas used for retail applications are typically patch antennas that is to say planar resonant antennas for narrow-band microwave wireless links that require semi-hemispherical coverage. They are often used as elements for an array. It is noted that most retail applications are based upon UHF (*Ultra High Frequency*) RFID tags whose signal frequency is comprised between 860 and 960 MHz.

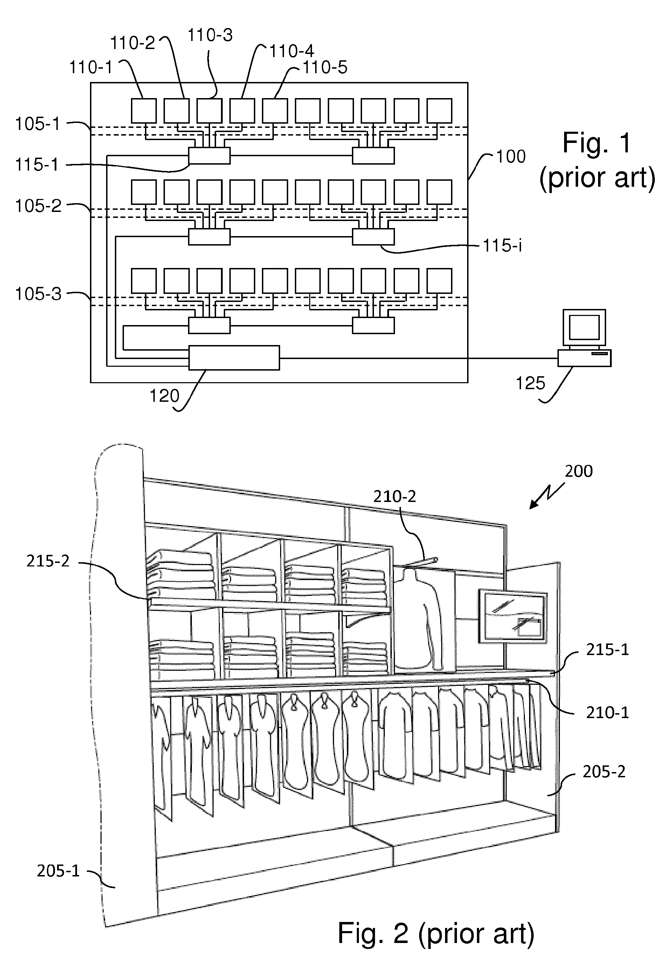

**Figure 1** illustrates schematically a back view of a back panel 100 of a shelving structure comprising horizontal shelves 105-1 to 105-3 for CDs, DVDs, books, or the like. As shown, back panel 100 includes an RFID infrastructure. More precisely, back panel 100 comprises several arrays of antennas, each array of antennas being associated with one multiplexer allowing the selection of an antenna in the array. For example, each of the antennas 110-1 to 110-5 is connected to the multiplexer 115-1. Similarly, antennas are connected to the multiplexer 115-i, as shown.

The multiplexers to which antennas are connected, for example multiplexers 115-1 and 115-i, are themselves connected to another multiplexer 120. In turn, multiplexer 120 is typically connected to an electronic circuit 125 comprising a microprocessor, for example a personal computer. Accordingly, the electronic circuit 125 can select and activate one antenna amongst all the antennas of the back panel 100 by controlling paths established by the multiplexers. The activation of an antenna allows electronic tags located in its vicinity to be read. For the sake of illustration, the activation of antenna 110-3 allows access to the information stored in the RFID tags attached to the items located in front of the antenna 110-3 (in front of the back panel 100) on the horizontal shelf 105-1.

As mentioned above, in view of the advantages they provide over other antennas, for example in terms of weight, cost, and ease of integration, patch antennas are often used for retail applications.

In order to optimize detection of RFID tags attached to items placed in a piece of furniture, the positions of the antennas within that piece of furniture have to be chosen carefully. They are typically determined as a function of the shape of the items, of the positions where the radio frequency tags are attached to the items, and of the way the items are placed in the piece of furniture (e.g. set down on a shelf, suspended from a hanging rail that is parallel to the back panel, or suspended from a hanging rail that is perpendicular to the back panel).

**Figure 2** illustrates an example of a set of pieces of furniture adapted to receive several types of items.

As illustrated, the set of pieces of furniture 200 comprises a first piece of furniture 205-1 and a second piece of furniture 205-2 which are aligned with each other along their longitudinal axis. These two pieces of furniture share a common hanging rail 210-1 which is parallel to their back plane and a common shelf 215-1 on top of the hanging rail 210-1. The piece of furniture 205-1 further comprises an additional shelf 215-2 (for the sake of illustration, the shelf 215-2 and the part of the shelf 215-1 belonging to the piece of furniture 205-1 are partitioned) and the piece of furniture 205-2 further comprises the hanging rail 210-2 which is perpendicular to the back panel of the piece of furniture 205-2.

First of all, it appears from Figure 2 that the positions of the radio frequency tags attached to items placed in the set of pieces of furniture 200 vary as a function of the items to which they are attached. Accordingly, the positions of the antennas and their characteristics are to be chosen so as to handle this constraint.

Moreover, depending upon the applications using the radio frequency tag reader, it may be requested that a radio frequency tag be only read by a single antenna (or antennas of a single set). Indeed, for example, the set of antennas used to read the radio frequency tags attached to items hung from the hanging rail 210-2 must read the tags of all the items hung from that hanging rail but should not read the tags of items placed on the shelf 215-2.

In view of the preceding, pieces of furniture embedding RFID features are generally built and organized as a function of the items to be presented.

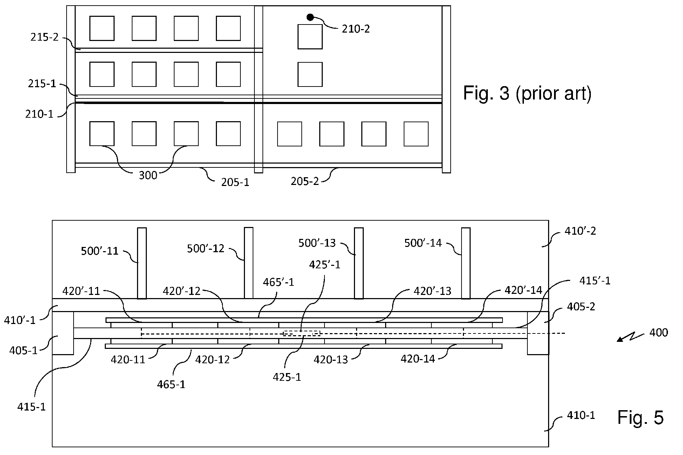

**Figure 3** illustrates a front view of the pieces of furniture illustrated in Figure 2 where the positions of the antennas are represented. As illustrated, the antennas, generically denoted 300, are arranged behind the items (when placed), their number being rigorously controlled to avoid extra costs resulting, in particular, from the antennas themselves, the required multiplexers and the connections between antennas and multiplexers.

As a consequence, since the pieces of furniture embedding RFID features cannot be standard, they are expansive.

Therefore, there is a need to improve pieces of furniture embedding RFID features.

### SUMMARY OF THE INVENTION

It is a broad object of the invention to remedy the shortcomings of the prior art as described here above.

It is an object of the present invention to provide a configurable piece of furniture having at least one antenna module and a radio frequency tag reader, the at least one antenna module comprising a plurality of antennas and a multiplexer for selectively connecting each antenna of the plurality of antennas to the radio frequency tag reader to identify radio frequency tags located in the vicinity of a selected antenna, the configurable piece of furniture comprising interrogating means for selecting sequentially each antenna of a set of active antennas to identify radio frequency tags located in the vicinity of the selected active antennas, the antennas of the set of active antennas being antennas of the plurality of antennas and the number of antennas in the plurality of antennas being greater than the number of antennas in the set of active antennas.

Accordingly, the invention enables the use of standardized elements to make convenient pieces of furniture providing radio frequency tag reading functions.

In an embodiment, the configurable piece of furniture further comprises logical configuration means for defining the set of active antennas among the antennas of the plurality of antennas.

In an embodiment, the antennas of the plurality of antennas have circular polarization so as to improve reading of radio frequency tags whatever their position.

In an embodiment, the configurable piece of furniture further comprises at least one insulating panel arranged in front of at least one antenna of the plurality of antennas, the at least one insulating panel being configured so as to avoid contact between the at least one antenna and an item placed in the vicinity of the at least one antenna.

In an embodiment, identifiers of the antennas of the set of active antennas are stored in the configurable piece of furniture and, preferably, the interrogating means comprise means for comparing identifiers of the antennas of the plurality of antennas with the stored identifiers of the antennas of the set of active antennas.

In an embodiment, the configurable piece of furniture comprises a plurality of similar standardized pre-cabled antenna modules.

In an embodiment, the configurable comprises a plurality of repositionable shelves.

In an embodiment, the configurable piece of furniture comprises at least one repositionable beam to which is fixed at least one hanging rail.

In an embodiment, the configurable piece of furniture comprises standardized metallic furniture elements.

It is another object of the present invention to provide a method for selecting antennas in a configurable piece of furniture having at least one antenna module and a radio frequency tag reader, the at least one antenna module comprising a plurality of antennas and a multiplexer for selectively connecting each antenna of the plurality of antennas to the radio frequency tag reader to identify radio frequency tags located in the vicinity of a selected antenna, the method comprising a step of selecting sequentially each antenna of a set of active antennas to identify radio frequency tags located in the vicinity of the selected active antennas, the antennas of the set of active antennas being antennas of the plurality of antennas and the number of antennas in the plurality of antennas being greater than the number of antennas in the set of active antennas.

Accordingly, the invention enables the use of standardized elements to make convenient pieces of furniture providing radio frequency tag reading functions.

In an embodiment, the method further comprises a step of configuring the configurable piece of furniture for defining the set of active antennas among the antennas of the plurality of antennas.

In an embodiment, the method further comprises a step of storing identifiers of the antennas of the set of active antennas in the configurable piece of furniture and, preferably, the step of selecting sequentially each antenna of the set of active antennas comprises a step of comparing identifiers of the antennas of the plurality of antennas with the stored identifiers of the antennas of the set of active antennas.

It is another object of the present invention to provide a computer program comprising instructions for carrying out each step of the method described above when the program is loaded and executed by a programmable apparatus. Again, the invention enables the use of standardized elements to make convenient pieces of furniture providing radio frequency tag reading functions.

### BRIEF DESCRIPTION OF THE DRAWINGS

Further advantages of the present invention will become apparent to those skilled in the art upon examination of the drawings and detailed description. It is intended that any additional advantages be incorporated herein.
**Figure 1** illustrates schematically a back view of a back panel of a shelving structure for CDs, DVDs, books, or the like embedding an RFID infrastructure;
**Figure 2** illustrates an example of a set of pieces of furniture adapted to receive several types of items;
**Figure 3** illustrates a front view of the pieces of furniture illustrated in Figure 2 where the positions of the antennas are represented;
**Figure 4** represents schematically a front view of a gondola comprising horizontal shelves and/or beams for fixing hanging rails, embedding an RFID infrastructure;
**Figure 5** schematically illustrates a top view of the gondola illustrated in Figure 4;
**Figure 6** represents schematically a top view of pieces of furniture and RFID electronic elements to illustrate an example of using a single RFID reader and the associated processing means to handle signals received by antennas of several gondolas;
**Figure 7** illustrates an example of active antennas in a set of four pieces of furniture; and
**Figure 8****,** comprising Figures 8a and 8b, illustrates an example of steps carried out in one or several local processing systems and in a central processing system for localizing items in a facility, respectively.

### DETAILED DESCRIPTION OF EMBODIMENTS OF THE INVENTION

According to a particular embodiment of the invention, pieces of furniture embedding radio frequency tag reading features are built from a standard set of elements comprising, in particular, pre-cabled modules. One or several pieces of furniture (forming a set of pieces of furniture) are connected to a local processing system that can be connected, in turn, to a central computing system.

The local processing system comprises at least one electronic tag reader that is connected to several antennas that are mounted within pieces of furniture. Each antenna of a piece of furniture can be activated or deactivated in order to configure the piece of furniture as a function of the items that are to be placed therein.

According to a particular embodiment, patch antennas are used to interrogate RFID tags of the UHF type whose signal frequency is approximately equal to 860 MHz or to 960 MHz. The patch antenna structure is designed so as to minimize the amount of cabling and the number of UHF connectors.

Still according to a particular embodiment, the patch antennas have circular polarization (i.e. the electric field of the passing wave changes direction in a rotary manner along a propagation direction). Using such a type of polarization improves detection of radio frequency tags since the possibility for the latter to receive energy increases.

To reduce cost, to make easy the implementation of the RFID system, and to optimize antenna density, parts of the furniture can be used as elements of the patch antennas. More precisely, parts of the furniture comprising parts of the RFID system are preconfigured as pre-cabled modules so as to reduce the number of connexions to make, in particular connexions for RF and control signals, when retail furniture is to be installed on a retail site.

In a particular embodiment, pieces of furniture embedding an RFID infrastructure comprise a visible surface, for example the front face of the back panel, and a hidden surface such as the back face of the back panel. The back panel, made of a conductor material such as sheet metal, can be used as the ground electrode of the patch antenna. The radiation electrode of the patch antenna is arranged in front of the back panel while the feedlines are arranged on the other side of the back panel, each radiation electrode being coupled with a feedline, for example with a probe feed arranged in a hole of the back panel. It is noted that other types of coupling can be used. For example, radiation electrodes can be coupled with feedlines according to a slot-coupling scheme.

Each feedline is connected to a multiplexer which is configured to select at most one of the radiation electrodes to which it is connected. Several multiplexers can be used in the same piece of furniture. In such a case, all the multiplexers connected to the radiation electrodes are advantageously connected to each other so as to transmit RF and control signals.

For the sake of illustration, the radiation electrodes can be made of aluminium, austenitic stainless steel, brass, copper, or more generally any nonmagnetic material that is a good electrical conductor. Each radiation electrode can be a square device of 160 x 160 millimetres or less and of one millimetre thick or less. They are preferably covered with an insulation layer that can be in contact with the radiation electrodes or spaced apart from the radiation electrodes so that the radiation electrodes cannot be in contact with items placed in front of them and so as to avoid electrical charges being transmitted via the radiation electrodes to electronic devices (e.g. multiplexers).

The radiation electrodes may be spaced apart by 160 to 300 millimetres, for example 266 millimetres. In the given example, the distance between radiation electrodes and the back panel is typically a few millimetres, for example 2 millimetres.

Examples of such arrangements are disclosed in patent applications EP 2 597 595, EP 2 597 594, and EP 2 597 593.

For the sake of illustration, the following description is directed to pieces of furniture of the gondola type. However, the invention applies to any type of furniture.

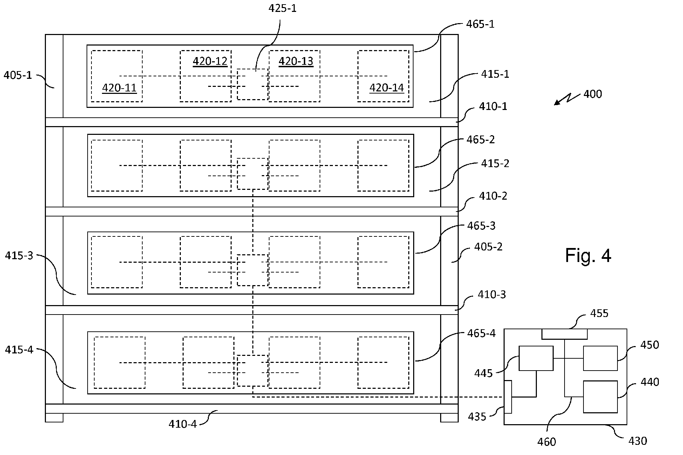

**Figure 4** represents schematically a front view of a piece of furniture 400 of the double-side gondola type comprising two vertical upright columns 405-1 and 405-2 to which can be attached horizontal shelves or beams (to which can be fixed hanging rails) 410-1 to 410-4 on a first side, horizontal shelves or beams 410'-1 to 410'-4 on the other side (not visible) and a back panel, embedding an RFID infrastructure. The position of the shelves and/or beams can be configured as needed.

According to the illustrated example, the piece of furniture 400 comprises pre-cabled modules, denoted 415-1 to 415-4, forming at least a part of the back panel and comprising an array of antennas and a multiplexer for selecting an antenna to be used. For example, pre-cabled module 415-1 comprises antenna radiation electrodes 420-11 to 420-14 and multiplexer 425-1 to which antenna radiation electrodes 420-11 to 420-14 are connected. As illustrated with dashed lines, multiplexer 425-1 is concealed by the back panel.

For the sake of illustration, the size of the pre-cabled modules 415-1 to 415-4 is standard. It can be equal to 400mm in height and 1330mm in width. Similarly, the number of antennas per pre-cabled module and their position are predetermined and are the same for groups of pre-cabled modules or for all the pre-cabled modules. The number of antennas per pre-cabled module can be equal to four and the antennas can be arranged on a regular basis.

It is noted that for the sake of clarity, the parts shown in Figure 4 are not represented using a common scale.

As illustrated with dashed lines, radiation electrodes, generically referred to as 420, are concealed by insulating panels 465-1 to 465-4 whose surface areas are smaller than that of the corresponding pre-cabled module. Alternatively, the surface areas of the insulating panels and of the pre-cabled modules can be the same. Alternatively again, one insulating panel can be associated with each radiation electrode.

According to a particular example, each radiation electrode is fastened by rivets, screws, or the like. According to a particular embodiment, one of the latter can be used as a probe feed. Each radiation electrode, in combination with the other parts of the corresponding patch antenna, is able to read the content of electronic tags located in its vicinity, typically in front of it (according to its radiation pattern).

To be operable, the multiplexers of the pre-cabled modules of the piece of furniture 400 are connected to a local processing system 430 via a first communication interface 435. The latter typically comprises a mother board 440 having a central processing unit (CPU), which is connected to an RFID reader 445, a storage means 450 (e.g., hard drive, solid-state drive, flash memory, or the like) and a second communication interface 455. Mother board 440 is, for example, a standard personal computer (PC) mother board. Communication interface 455 can be, for example, of the Ethernet or of the WiFi type. It allows local processing system 430 to receive data from and to transmit data to a central processing system. Local processing system 430 can be connected to one or more pieces of furniture, allowing selection of each antenna of the latter.

According to the given example, mother board 440, RFID reader 445, storage means 450, and second communication interface 455 are connected to each other via communication bus 460.

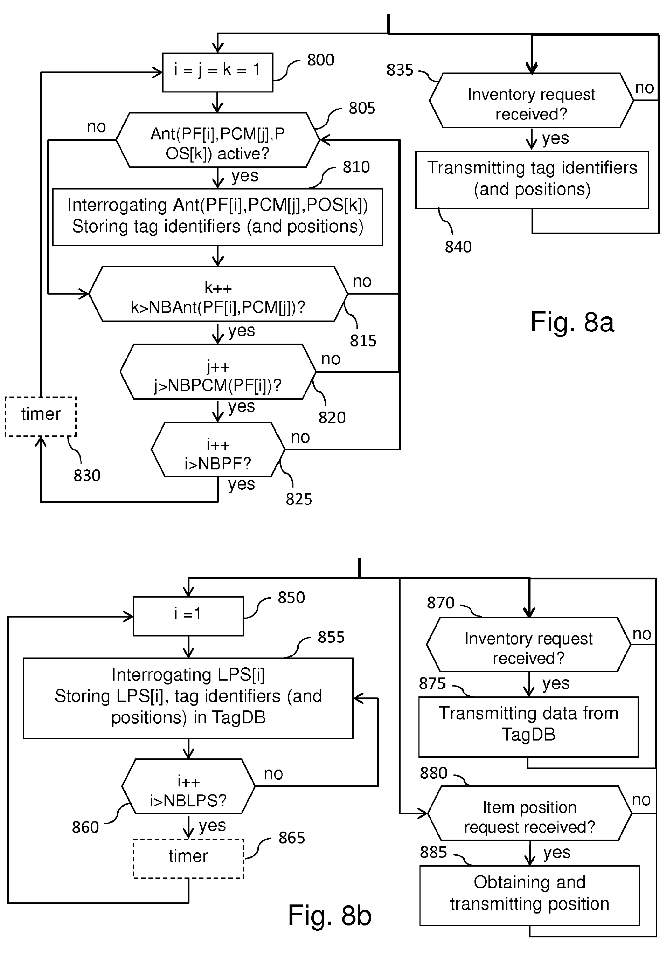

Local processing system 430 is configured for executing a computer program such as a computer program carrying out the steps described by reference to Figure 8a.

As illustrated, RFID reader 445 is connected to a first pre-cabled module 415-4 which is in turn connected to a second pre-cabled module 415-3 and so on so that each pre-cabled module is connected to the neighbouring pre-cabled module. The same serial connection scheme is advantageously used when RFID reader 445 is connected to several pieces of furniture.

According to a particular embodiment, an RF signal link of RFID reader 445 is connected to an RF signal up-going link of the multiplexer (*RF up*) of the first pre-cabled module (415-4), an RF signal down-going link of the multiplexer (*RF_down*) of the first pre-cabled module (415-4) is connected to an RF signal up-going link of the multiplexer of the second pre-cabled module (415-3), and so on.

Likewise, control signal links of RFID reader 445 are connected to control signal up-going links of the multiplexer of the first pre-cabled module (415-4), control signal down-going links of the multiplexer of the first pre-cabled module (415-4) are connected to control signal up-going links of the multiplexer of the second module (415-3), and so on.

The RF connexions are preferably established by using UHF coaxial cables while control signal (and power) connexions are preferably established by using ribbon cables. Connectors, preferably keyed connectors, can be used to establish such connexions.

According to a particular embodiment, the multiplexer of a pre-cabled module comprises the same number of two-state UHF switches as the number of patch antennas that the pre-cabled module comprises. In this embodiment, each two-state UHF switch can be controlled by a latch, for example a D flip-flop. It is to be recalled here that the input (D) of a D flip-flop is copied to its output (Q) on clock (*Clk*) rising edges while a reset signal (*rst*) is used to set its output to the zero logical state.

Still according to a particular embodiment, each multiplexer can be connected to radiation electrodes by means of probe feeds (crossing a back panel) and rigid microstrip lines. It is noted that the position of a probe feed relative to the corresponding radiation electrode is set as a function of the antenna characteristics. According to a particular example, each probe feed is horizontally centred on the radiation electrode and vertically located around one or two thirds of the radiation electrode's height (allowing two parallel rigid microstrip lines to link a MUX board to two radiation electrodes, as illustrated). Alternatively, the multiplexers can be connected to radiation electrodes by other means, for example using flexible cables. It is also possible to combine several connection means, for example to use rigid microstrip lines to connect some of the radiation electrodes to the multiplexers and flexible cables to connect other radiation electrodes to the multiplexers.

Each multiplexer allows selection of at most one antenna so as to connect the selected radiation electrode to a radio frequency signal up-going link (*RF_up*) or to connect the radio frequency signal up-going link to a radio frequency signal down-going link (*RF_down*) for selecting an antenna connected to the multiplexer considered or to a multiplexer connected to the multiplexer considered.

It is considered herein that an up-going signal, from the perspective of a particular multiplexer, is directed to a link established between a particular multiplexer and a reader to which it is connected (directly or indirectly) while a down-going signal is directed to a link established between the particular multiplexer and another multiplexer, the latter being connected, directly or indirectly, to a reader via the particular multiplexer.

Each multiplexer is controlled by control signals allowing the selection of a given antenna, that is to say a given radiation electrode. The control signals are transmitted from a multiplexer to its neighbour.

According to a particular embodiment, control signal links are bidirectional. If needed, the multiplexer can be powered.

Typically, a multiplexer is a PCB (Printed Circuit Board) embedding one or several standard multiplexer devices and associated electronic circuitry. It is designed so as to be easily connectable to the microstrip lines that feed the radiation electrodes to which the multiplexer has to be connected.

**Figure 5** schematically illustrates a top view of the piece of furniture 400 illustrated in Figure 4.

As illustrated, a first side of the piece of furniture 400 comprises horizontal shelf 410-1, attached to the two vertical upright columns 405-1 and 405-2, and pre-cabled module 415-1 comprising antenna radiation electrodes 420-11 to 420-14 and multiplexer 425-1 to which antenna radiation electrodes 420-11 to 420-14 are connected as well as insulating panel 465-1.

Similarly, the second side of the piece of furniture 400 comprises beam 410'-1 to which are fixed hanging rails 500'-11 to 500'-14 and horizontal shelf 410'-2, attached to the two vertical upright columns 405-1 and 405-2, and pre-cabled module 415'-1 comprising antenna radiation electrodes 420'-11 to 420'-14 and multiplexer 425'-1 to which antenna radiation electrodes 420'-11 to 420'-14 are connected as well as insulating panel 465'-1.

The piece of furniture illustrated in Figures 4 and 5 is based on standard items of pieces of furniture, for example standard metallic items of pieces of furniture.

Since an important portion of the cost of an RFID system results from the use of one or more RFID readers, it is possible to use one RFID reader in conjunction with several pieces of furniture to reduce significantly the global costs of the system. Moreover, since pieces of furniture, in particular pieces of furniture of the gondola type, are generally organized side by side to optimize space occupation in supermarket, connecting the antennas of several pieces of furniture to one RFID reader is easy and economical.

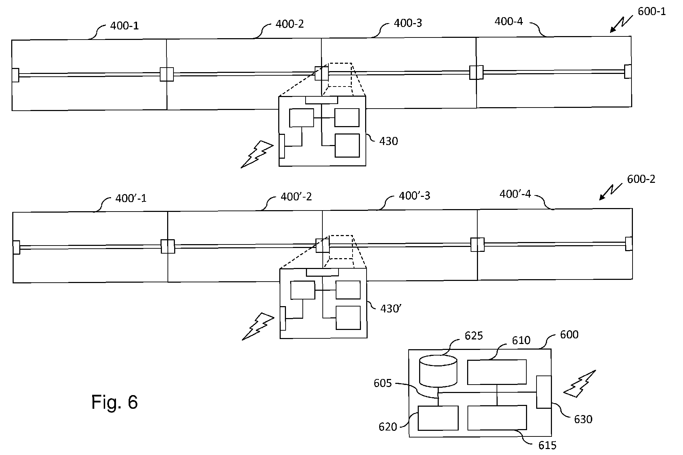

**Figure 6** represents schematically a top view of pieces of furniture and RFID electronic elements to illustrate an example of using a single RFID reader and the associated processing means to handle signals received by antennas of several pieces of furniture, for example several gondolas.

As illustrated, the set 600-1 comprising pieces of furniture 400-1 to 400-4 (represented according to a top view) is associated with local processing system 430. Likewise, the set 600-2 comprising pieces of furniture 400'-1 to 400'-4 is associated with local processing system 430'.

According to a particular embodiment, local processing systems 430 and 430' are arranged within a piece of furniture, as illustrated with dashed lines, for example in a lower position of the third piece of furniture, that is to say approximately in the middle of the sets of pieces of furniture so as to optimize cabling. Indeed, in order to minimize radio frequency loss in the cables used to connect the local processing systems to the multiplexers of the pre-cabled modules, that is to say to minimize the length of these cables, the local processing system is advantageously located in the middle of the pieces of furniture, as illustrated.

Each piece of furniture 400-1 to 400-4 and 400'-1 to 400'-4 is similar to the piece of furniture 400 described by reference to Figures 4 and 5. In particular, the radio frequency tag reading features are the same in each of the pieces of furniture 400-1 to 400-4 and 400'-1 to 400'-4 and the antennas can be accessed individually thanks to multiplexers.

The multiplexers of the pieces of furniture 400-1 to 400-4 and 400'-1 to 400'-4 are connected, directly or indirectly, to the local processing systems 430 and 430', respectively, so that the local processing system 430 can transmit or receive data selectively via each antenna of the pieces of furniture 400-1 to 400-4 and that the local processing system 430' can transmit or receive data selectively via each antenna of the pieces of furniture 400'-1 to 400'-4.

According to a particular embodiment, a subset of the antennas of the pieces of furniture can be selected so as to avoid using antennas that are useless in view of the configuration of the pieces of furniture (for example antennas located behind shelves or beams). The antennas of such a subset are denoted active antennas (the others are denoted inactive antennas). They are typically used to handle an inventory request.

Antennas are set as active or inactive in a logical configuration step, as a function of the configuration of the corresponding piece of furniture, that is to say as a function of the position and kind of items to be placed in the piece of furniture.

Such a logical configuration step can be carried out locally (using an interface associated with the corresponding local processing system) or remotely (using, for example, the central processing system). It typically comprises the step of identifying the antennas that are to be set as active and/or as inactive.

Identification of an antenna may consist in determining its position (a, *b, c, d*) by identifying the position (*a*) of the antenna within the module to which it belongs, the position (*b*) of that module in the piece of furniture (e.g. its elevation) comprising that module, the position (*c*) of the piece of furniture to which belongs that module in the set of pieces of furniture connected to the same local processing system, and the side (*d*) of the piece of furniture where the antenna can detect items.

For the sake of illustration, a set of active antennas and a set of inactive antennas can be defined as follows:
active: {(1,4,1,0), (2,4,1,0), (1,3,1,0), (2,3,1,0), (1,2,1,0), (2,2,1,0), (3,2,1,0), (4,2,1,0), (1,1,1,0), (2,1,1,0), (3,1,1,0), (4,1,1,0)}
inactive: {(3,4,1,0), (4,4,1,0), (3,3,1,0), (4,3,1,0)}
with regard to Figure 4, this means that all the antennas are active except the four antennas forming a square in the top right.

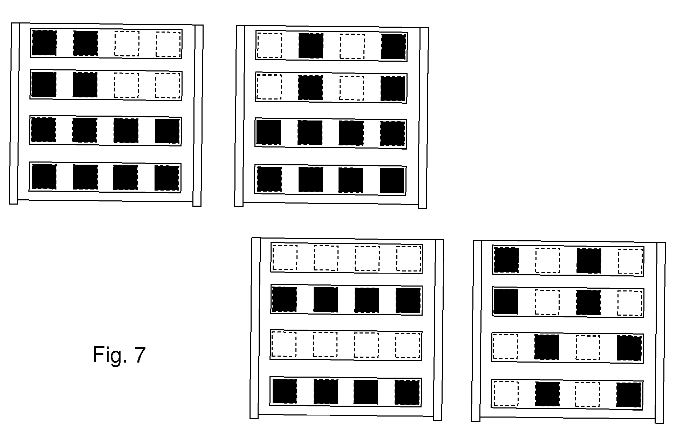

Still for the sake of illustration, **Figure 7** illustrates an example of active antennas (represented in black) in a set of four pieces of furniture.

The sets of active antennas and/or of inactive antennas can be stored locally in the local processing systems.

As mentioned above, inactive antennas are, for example, antennas positioned behind shelves or beams.

It is noted that identifying antennas that are to be set as active can be done manually by an operator or automatically, for example in view of the layout of a piece of furniture.

Returning to Figure 6 and as mentioned above, local processing systems 430 and 430' comprise a communication interface enabling the local processing systems to receive data from and/or transmit data to a central processing system 600. In addition, each of the local processing systems 430 and 430' comprises a software module capable of selecting each antenna of the pieces of furniture to which the local processing systems are connected, of transmitting interrogation requests and of receiving responses to the interrogation requests, enabling an inventory of RFID tags located in the vicinity of the antennas to be made.

The results of the inventory operations are preferably stored locally in a memory of the local processing systems. According to a particular embodiment, a loop on each activated antenna of each pre-cabled module of each piece of furniture of a set of pieces of furniture is carried out at regular intervals of time and/or on request.

It is noted that even though only two sets of pieces of furniture are illustrated in Figure 6, more than two sets can be used. Accordingly, more than two local processing systems can receive data from and/or transmit data to a central processing system. Likewise, the number of pieces of furniture associated with one local processing system may vary from one set of pieces of furniture to another.

Central processing system 600 can be, for example, a server. It comprises a communication bus 605, a central processing unit 610 capable of executing instructions from program ROM 615 on powering up of the device, and instructions relating to a software application from main memory 620 after the powering up. The main memory 620 is for example of Random Access Memory (RAM) type which functions as a working area of CPU 610 via the communication bus 605, and the memory capacity thereof can be expanded by an optional RAM connected to an expansion port (not illustrated). Instructions relating to the software application may be loaded into the main memory 620 from a hard-disk (HD) 625 or the program ROM 615 for example. Such a software application can be, in particular, a software application carrying out the steps described by reference to Figure 8b.

Reference numeral 630 is a network interface that allows the device 600 to receive data from and/or to transmit data to other devices, in particular to local processing systems 430 and 430'.

It should be pointed out here that, as a variant, the device 600 can consist of one or more dedicated integrated circuits (ASICs).

According to a particular embodiment, the central processing system interrogates the local processing systems at regular intervals of time and/or on request to obtain the results of the inventory operations carried out by the local processing system of each set of pieces of furniture or of some of the sets of pieces of furniture. It is noted that a local processing system can be identified by an identifier such as an Ethernet identifier, an IP (Internet Protocol) address, or similar. The obtained results can be consolidated into one or more databases.

**Figure 8****,** comprising Figures 8a and 8b, illustrates an example of steps carried out in one or several local processing systems and in a central processing system for identifying items in pieces of furniture, respectively.

Turning to Figure 8a which illustrates an example of steps carried out in a local processing system, a first step is directed to initializing indexes *i, j,* and *k* to the value one (step 800). These indexes are indexes of a piece of furniture associated with the local processing system, of a pre-cabled module in a piece of furniture associated with the local processing system, and of a position of an antenna in a pre-cabled module in a piece of furniture associated with the local processing system, respectively.

The following step (step 805) is directed to determining whether or not the antenna identified as being located in the piece of furniture (PF) having index *i* (in the set of pieces of furniture associated with the local processing system carrying out the described steps), in the pre-cabled module (PCM) of that piece of furniture having index *j*, at the position (POS) *k* of that pre-cabled module is active. This can be done by determining whether or not the identified antenna belongs to a set of active antennas or to a set of inactive antennas, for example by comparing an identifier of the identified antenna with the identifiers of the active antennas (and/or the identifiers of the inactive antennas).

If the identified antenna is active, the following step (step 810) is directed to identifying all the RFID tags that are located in the vicinity of the identified antenna. To that end, the multiplexers are set appropriately according to a predetermined table or predetermined rules.

The obtained RFID tag identifiers are stored in a local database. According to a particular embodiment, the RFID tag identifiers can be stored in relation with their local positions, that is to say, for example, with indexes *i, j,* and *k*.

Next, if the identified antenna is inactive or after having identified all the RFID tags that are located in the vicinity of the identified antenna, index *k* is incremented by one and a test is performed to determine whether or not the value of this index is greater than *NBAnt(PF[i],PCM[j])* which represents the number of antennas in the pre-cabled module having index *j* of the piece of furniture having index *i* in the set of pieces of furniture associated with the local processing system carrying out the described steps (step 815). This value can be common to all pre-cabled modules or determined as a function of a pre-cabled module type.

If the value of index *k* is not greater than *NBAnt(PF[i],PCM[j]),* step 805 is repeated.

On the contrary, if the value of index *k* is greater than *NBAnt(PF[i],PCM[j])*, index *j* is incremented by one and a test is performed to determine whether or not the value of this index is greater than *NBPCM(PF[i])* which represents the number of pre-cabled modules in the piece of furniture having index *i* in the set of pieces of furniture associated with the local processing system carrying out the described steps (step 820). This value can be common to all pieces of furniture associated with the local processing system carrying out the described steps or determined as a function of a type of pieces of furniture.

If the value of index *j* is not greater than *NBPCM(PF[i]),* step 805 is repeated.

On the contrary, if the value of index *j* is greater than *NBPCM(PF[i]),* index *i* is incremented by one and a test is performed to determine whether or not the value of this index is greater than *NBPF* which represents the number pieces of furniture in the set of pieces of furniture associated with the local processing system carrying out the described steps (step 825).

If the value of index *i* is not greater than *NBPF,* step 805 is repeated. On the contrary, if the value of index *i* is greater than *NBPF,* the algorithm is branched to step 800 where indexes *i, j,* and *k* are reinitialized. As illustrated, a programmable timer can be used (step 830) so as to perform an RFID tag inventory on a periodic basis.

In parallel to steps 800 to 830, step 835 is directed to determining whether a request for transmitting an RFID tag inventory, that is to say a list of RFID tag identifiers and possibly associated local positions, has been received. Such a request is typically received from a central processing system.

If such a request is received, the RFID tag identifiers and possibly their local positions as determined in step 810 are transmitted to the system at the origin of the request or to a system that can be identified from the request (step 840). After the RFID tag identifiers and possibly their local positions have been transmitted, the algorithm is branched to step 835 to process a following request.

It is noted that, in response to an inventory request, all the RFID tag identifiers (and possibly the associated local positions) can be transmitted or, alternatively, only the new identified RFID tag identifiers (and possibly their local positions) and the RFID tag identifiers that have been previously identified but that are no longer detected can be transmitted. The choice can be made as a function of an indication received in the request.

It is also noted that local positions can consist in a set of indexes of a piece of furniture, of a pre-cabled module, and of an antenna. It can also consist in coordinates determined in a predetermined coordinate system, for example a coordinate system centered on the local processing system, in the mks system, or centered on the local processing system, in a system expressed as a function of the size of pieces of furniture that is standardized.

Turning to Figure 8b which illustrates an example of steps carried out in a central processing system, a first step is directed to initializing index i to the value one (step 850). Index *i* is an index of the local processing systems that enable an RFID tag inventory to be carried out.

In a following step (step 855), an inventory request is sent to the local processing system (LPS) having index *i.* In response to the request, the central processing system receives a set of RFID tag identifiers and possibly local positions which are stored in a tag database (TagDB) along with an identifier of the current selected local processing system (LPS[i]).

Next, index *i* is incremented by one and a test is performed to determine whether or not the value of this index is greater than *NBLPS* which represents the number of local processing systems that can carry out an RFID tag inventory (step 860). This value can be determined in a configuration step.

If the value of index *i* is not greater than *NBLPS,* step 855 is repeated. On the contrary, if index *i* is greater than *NBLPS,* the algorithm is branched to step 850 where index *i* is reinitialized. As illustrated, a programmable timer can be used (step 865) so as to perform an RFID tag inventory on a periodic basis.

In parallel to steps 850 to 865, step 870 is directed to determining whether an inventory request is received. Such a request is typically received from a user via a graphical user interface or from a remote processing system.

If such a request is received, the content of the tag database TagDB representing inventory data or a part of the content of that database, representing partial inventory data, is transmitted to the requester (step 875) and the algorithm is branched to steps 870 and 880 to process a following request.

Still in parallel with steps 850 to 865, step 880 is directed to determining whether a request for determining the position of an item associated with a tag has been received. Again, such a request is typically received from a user via a graphical user interface or from a remote processing system.

If such a request is received, the RFID tag identifier corresponding to the searched item is obtained. It can be obtained from a product database that is used, in particular, to establish a link between each product and each tag identifier, the product identifier and the RFID tag identifier being advantageously the same. Next, according to a particular embodiment, using the obtained RFID tag identifier, a local position and a local processing system identifier (LPSID) are obtained from the tag database. The position of the local processing system whose identifier corresponds to the obtained local processing system identifier (LPSID) is then obtained. Such a position can be obtained from a facility layout map. Still according to a particular embodiment, the position of the RFID tag corresponding to the item searched for is then determined as a function of the obtained local position and of the position of the local processing system and transmitted to the requester.

After the position of the searched item has been determined, it is transmitted to the requester (step 885) and the algorithm is branched to steps 870 and 880 to process a following request.

The position of an item can then be displayed.

It is noted that several antennas can be used to identify RFID tags attached to certain items of great size since a tag can generally be placed anywhere on an item. Therefore, it is possible to create sets of antennas that correspond to single positions of items. Such sets of antennas can be created when configuring corresponding pieces of furniture and transmitted along with inventory data. Accordingly, these sets may be represented on a display to help localize a searched item.

Naturally, in order to satisfy local and specific requirements, a person skilled in the art may apply to the solution described above many modifications and alterations all of which, however, are included within the scope of protection of the invention as defined by the following claims.

## Claims

1. A configurable piece of furniture having at least one antenna module and a radio frequency tag reader, the at least one antenna module comprising a plurality of antennas and a multiplexer for selectively connecting each antenna of the plurality of antennas to the radio frequency tag reader to identify radio frequency tags located in the vicinity of a selected antenna, the configurable piece of furniture comprising interrogating means for selecting sequentially each antenna of a set of active antennas to identify radio frequency tags located in the vicinity of the selected active antennas, the antennas of the set of active antennas being antennas of the plurality of antennas and the number of antennas in the plurality of antennas being greater than the number of antennas in the set of active antennas.

2. The configurable piece of furniture of claim 1, further comprising logical configuration means for defining the set of active antennas among the antennas of the plurality of antennas.

3. The configurable piece of furniture of claim 1 or claim 2, wherein the antennas of the plurality of antennas have circular polarization.

4. The configurable piece of furniture of any one of claims 1 to 3, further comprising at least one insulating panel arranged in front of at least one antenna of the plurality of antennas, the at least one insulating panel being configured so as to avoid contact between the at least one antenna and an item placed in the vicinity of the at least one antenna.

5. The configurable piece of furniture of any one of claims 1 to 4, wherein identifiers of the antennas of the set of active antennas are stored in the configurable piece of furniture.

6. The configurable piece of furniture of claim 5, wherein the interrogating means comprise means for comparing identifiers of the antennas of the plurality of antennas with the stored identifiers of the antennas of the set of active antennas.

7. The configurable piece of furniture of any one of claims 1 to 6 comprising a plurality of similar standardized pre-cabled antenna modules.

8. The configurable piece of furniture of any one of claims 1 to 7 comprising a plurality of repositionable shelves.

9. The configurable piece of furniture of any one of claims 1 to 8 comprising at least one repositionable beam to which is fastened at least one hanging rail.

10. The configurable piece of furniture of any one of claims 1 to 9 comprising standardized metallic furniture elements.

11. A method for selecting antennas in a configurable piece of furniture having at least one antenna module and a radio frequency tag reader, the at least one antenna module comprising a plurality of antennas and a multiplexer for selectively connecting each antenna of the plurality of antennas to the radio frequency tag reader to identify radio frequency tags located in the vicinity of a selected antenna, the method comprising a step of selecting sequentially each antenna of a set of active antennas to identify radio frequency tags located in the vicinity of the selected active antennas, the antennas of the set of active antennas being antennas of the plurality of antennas and the number of antennas in the plurality of antennas being greater than the number of antennas in the set of active antennas.

12. The method of claim 11, further comprising a step of configuring the configurable piece of furniture for defining the set of active antennas among the antennas of the plurality of antennas.

13. The method of claim 11 or claim 12, further comprising a step of storing identifiers of the antennas of the set of active antennas in the configurable piece of furniture.

14. The method of claim 13, wherein the step of selecting sequentially each antenna of the set of active antennas comprises a step of comparing identifiers of the antennas of the plurality of antennas with the stored identifiers of the antennas of the set of active antennas.

15. A computer program comprising instructions for carrying out each step of the method according to any one of claims 11 to 14 when the program is loaded and executed by a programmable apparatus.
